# NEUE EUROPÄISCHE PATENTSCHRIFT

(11) **EP 3 030 532 B2**
(45) Veröffentlichungstag und Bekanntmachung des Hinweises auf die Entscheidung über den Einspruch: **19.05.2021**
(45) Hinweis auf die Patenterteilung: 21.02.2018
(21) Anmeldenummer: 14747837.4
(22) Anmeldetag: 28.07.2014
(51) Int. Cl.: C04B 2/12, F27B 1/04

(54) **VERFAHREN ZUM BRENNEN UND KÜHLEN VON KARBONATGESTEINEN IN EINEM GLEICHSTROM-REGENERATIV-KALKSCHACHTOFEN**
PROCESS FOR BURNING AND COOLING CARBONATE ROCK IN A PARALLEL-FLOW REGENERATIVE LIME KILN
PROCÉDÉ DE COMBUSTION ET DE REFROIDISSEMENT DE ROCHES CARBONATÉES DANS UN CHAUFOUR À RÉGÉNÉRATION PAR COURANT CONTINU

(30) Priorität: 05.08.2013 DE 102013108410
(43) Veröffentlichungstag der Anmeldung: 15.06.2016
(73) Patentinhaber: Maerz Ofenbau AG, 8027 Zürich (CH)
(72) Erfinder: PIRINGER, Hannes, CH-5712 Beinwil am See (CH)
(74) Vertreter: Tetzner, Michael
(86) Internationale Anmeldenummer: PCT/EP2014/002056
(87) Internationale Veröffentlichungsnummer: WO 2015/018504

(56) Entgegenhaltungen:
- DE-A1- 3 038 927
- Hannes Piringer: "Schüttgutbewegung, Strömungsverhalten und Temperaturverteilung in der Kühlzone eines 800 und 1000 tato MAERZ-Regenerativ-Kalkschachtofens", Veitsch-Radex Rundschau 1/199, 31. Januar 1999 (1999-01-31), Seiten 3-15, XP055146833, Gefunden im Internet: URL:http://www.maerz.com/downloads/downloa ds_publications/piringer3.pdf [gefunden am 2014-10-15] in der Anmeldung erwähnt
- Duc Hai Do: "Simulation of Lime Calcination in Normal Shaft and Parallel Flow Regenerative Kilns (dissertation)", , 25 April 2012 (2012-04-25), pages FP-117,
- "The Maerz® parallel Flow Regenerative Lime Kiln", Maerz, 2002, pages 1-20,

## Beschreibung

Die Erfindung betrifft ein Verfahren zum Brennen und Kühlen von Karbonatgesteinen in einem Gleichstrom-Regenerativ-Kalkschachtofen mit zwei Schächten, die abwechselnd als Brennschacht und als Regenerativschacht betrieben werden.

Ein derartiger, beispielsweise aus der DE 30 38 927 C2 bekannter Ofen arbeitet zyklisch, wobei nur im Brennschacht gebrannt wird, während der andere Schacht als Regenerativschacht arbeitet. Während eines Zyklus, welcher beispielsweise 10-12 min. dauert, wird das zu brennende Karbonatgestein kontinuierlich über Austragseinrichtungen an beiden Schächten ausgetragen. Die Materialsäule sinkt gleichmäßig in den Schächten ab. Danach wird der Ofen umgesteuert, sodass der Schacht, welcher zuvor als Brennschacht gearbeitet hat, zum Regenerativschacht und der Schacht, der zuvor als Regenerativschacht gearbeitet hat, wiederum zum Brennschacht wird. Die Beschickung des Ofens mit Karbonatgestein erfolgt während des Umsteuervorganges oder während des Brennvorganges am Regenerativschacht. Im unteren Bereich der beiden Schächte sind Kühlzonen zum Kühlen des im oberen Bereich kalzinierten Karbonatgesteins vorgesehen, wobei die hierfür verwendete Kühlluft zum Teil im Bereich der Austragseinrichtungen und zum Teil über einen in jeder Kühlzone angeordneten, zentralen Verdrängungskörper zugeführt wird.

Die Qualität des Endprodukts hängt entscheidend davon ab, dass das kalzinierte Karbonatgestein über die Breite der Schächte möglichst gleichmäßig nach unten absinkt und die Kühlzone derart ausgebildet ist, dass eine möglichst gleichmäßige Kühlung gewährleistet ist. Aus dem Artikel von Hannes Piringer, "Schüttgutbewegung, Strömungsverhalten und Temperaturverteilung in der Kühlzone eines 800 und 1000 tato Maerz-Regenerativ-Kalkschachtofens, Veitsch-Radex Rundschau 1/1999, Seiten 1 bis 15 ist der oben beschriebene Gleichstrom-Regenerativ-Kalkschachtofen bekannt. Außerdem werden Untersuchungen für eine optimale Gestaltung der Kühlzone und der Austragsorgane näher vorgestellt.

Aus der Praxis weiß man, dass bei Gleichstrom-Regenerativ-Kalkschachtöfen der Neigungswinkel in der Kühlzone sehr steil sein muss, da insbesondere bei Kleinstein (z.B. 10 bis 50 mm) das Brenngut am äußeren Rand der Kühlzone nicht mehr absinkt und sich dadurch massive Ansätze bilden. Man ist daher bei den Maerz-Feinsteinöfen zu zylindrischen oder leicht konischen Kühlzonen mit einem Neigungswinkel von mehr als 82° übergegangen. Damit konnten zwar die Probleme des Materialstaus behoben werden, jedoch treten durch diese Bauweise andere Nachteile auf. Bedingt durch die Konstruktion ist der Austrittsdurchmesser am unteren Ende der Kühlzone deutlich größer, sodass es schwierig ist, die Kühlluft in der Kühlzone gleichmäßig zu verteilen, um das Brenngut gleichmäßig zu kühlen. Eine ungleichmäßige Kühlung des Brenngutes hat aber zufolge, dass vor allem das Brenngut in der Schachtmitte nicht ausreichend gekühlt wird, wodurch Beschädigungen an den Austragseinrichtungen auftreten können. Andererseits wird das Brenngut im Außenbereich insbesondere im oberen Bereich der Kühlzone zu stark gekühlt, wodurch es zu einer ungewollten Reaktion der Verbrennungsabgase mit den Brenngut kommen kann und das Brenngut sich mit CO₂ aus den Verbrennungsabgasen wieder anreichert und dadurch die Produktqualität verschlechtert wird. Zur Vermeidung von lokalen Überhitzungen hat man daher die spezifische Kühlluftmenge zum Kühlen des Brenngutes erhöht, was aber wiederum auch eine erhöhte Abgastemperatur zufolge hat, die den Wärmeverbrauch negativ beeinflusst. Man hat außerdem vorgeschlagen den zentralen Verdrängungskörper zu vergrößern, wodurch sich die Kühlluftverteilung insbesondere im unteren Teil verbessert. Bei großen Verdrängungskörpern reicht die Spitze fast bis zum unteren Ende der Brennzone. Sie sind jedoch sehr aufwendig und teuer, da sie doppelwandig ausgeführt werden müssen und permanent, auch bei Ofenstillstand, mit Luft gekühlt werden müssen.

Man ist daher wieder zu kleineren Verdrängungskörpern übergegangen, die sich maximal nur bis zur halben Kühlzonenhöhe erstrecken. Um eine möglichst gute Kühlwirkung zu erreichen, wurde der größte Teil der Kühlluft üblicherweise mindestens 85% über die Austragseinrichtungen und der Rest von maximal 15% über die zentralen Verdrängungskörper zugeführt.

Der Erfindung lag die Aufgabe zugrunde eine noch gleichmäßigere Kühlung in den Kühlzonen eines Gleichstrom-Regenerativ-Kalkschachtofens mit möglichst geringer Kühlluftmenge zu erreichen.

Erfindungsgemäß wird diese Aufgabe durch die Merkmale des Anspruchs 1 gelöst.

Das erfindungsgemäße Verfahren zum Brennen und Kühlen von Karbonatgesteinen erfolgt in einem Gleichstrom-Regenerativ-Kalkschachtofen mit zwei Schächten, die abwechselnd als Brennschacht und als Regenerativschacht betrieben werden, wobei
a. das Karbonatgestein in einem oberen, als Vorwärm- und Brennzone ausgebildeten Bereich jedes Schachtes zugegeben wird und dort vorgewärmt und kalziniert wird,
b. das kalzinierte Karbonatgestein nachfolgend in einem unteren, als Kühlzone ausgebildeten und einen zentralen Verdrängungskörper aufweisenden Bereich jedes Schachtes abgekühlt wird,
c. das abgekühlte, kalzinierte Karbonatgestein anschließend über eine jedem Schacht zugeordnete Austragseinrichtung ausgetragen wird, und
wobei
d. der Kühlzone zum Kühlen des kalzinierten Karbonatgesteins Kühlluft zugeführt wird, die zum Teil im Bereich der Austragseinrichtung und zum Teil über den Verdrängungskörper eingeführt wird,
e. die dem Brennschacht zuzuführende Kühlluftmenge zu 90 bis 100% über den Verdrängungskörper und zu maximal 10% im Bereich der Austragseinrichtung zugeführt wird, während die dem Regenerierschacht zuzuführende Kühlluftmenge zu 90 bis 100% im Bereich der Austragseinrichtung und zu maximal 10% über den Verdrängungskörper zugeführt wird.

Der Gleichstrom-Regenerativ-Kalkschachtofen zum Brennen und Kühlen von Karbonatgesteinen gemäß dem obigen Verfahren weist zwei abwechselnd als Brennschacht und als Regenerativschacht betriebene Schächte auf, wobei
a. der obere Bereich jedes Schachtes als Vorwärm- und Brennzone zur Vorwärmung und Kalzination von aufgegebenem Karbonatgestein ausgebildet ist,
b. der untere Bereich jedes Schachtes als Kühlzone zur Kühlung des kalzinierten Karbonatgesteins ausgebildet ist,
c. die Kühlzonen jeweils einen zentralen Verdrängungskörper aufweisen, der in die jeweilige Kühlzone mündende Gasaustrittsöffnungen aufweist,
d. eine sich an die Kühlzone anschließende Austragseinrichtung zum Austragen des abgekühlten, kalzinierten Karbonatgesteins vorgesehen ist,
e. wobei eine erste Kühlluftleitung mit den Gasaustrittsöffnungen des Verdrängungskörpers des einen Schachtes und eine zweite Kühlluftleitung mit den Gasaustrittsöffnungen des Verdrängungskörpers des anderen Schachtes zur Zuführung von Kühlluft über die Verdrängungskörper in Verbindung steht,
f. eine dritte Kühlluftleitung im Bereich der Austragseinrichtung des einen Schachtes und eine vierte Kühlluftleitung im Bereich der Austragseinrichtung des anderen Schachtes mündet und
g. eine Steuereinrichtung vorgesehen ist, um die über die erste und/oder zweite Kühlluftleitung sowie über die dritte und/oder vierte Kühlluftleitung zuzuführende Kühlluftmenge derart zu steuern, dass die dem Brennschacht zuzuführende Kühlluftmenge zu 90 bis 100% über den Verdrängungskörper und zu maximal 10% im Bereich der Austragseinrichtung zugeführt wird, während die dem Regenerierschacht zuzuführende Kühlluftmenge zu 90 bis 100% im Bereich der Austragseinrichtung und zu maximal 10% über den Verdrängungskörper zugeführt wird.

Mit diesem neuen Konzept der Kühlluftmengenverteilung wird eine sehr gleichmäßige Kühlung in den Kühlzonen erreicht, sodass sich die Isothermenlinien in der Kühlzone annähernd waagrecht ausbilden. Dies ermöglicht zum einen eine sehr gleichmäßige und hochwertige Produktqualität und verhindert außerdem, dass die Austragseinrichtung durch zu heißes Karbonatgestein beschädigt wird. Weiterhin reduziert die neue Kühlluftführung die für die Produktkühlung erforderliche Gesamtkühlmenge. Sie beträgt beim Kalzinieren von Karbonatgestein mit einem CaCO₃-Gehalt von mehr als 97% beträgt weniger als 0,7 Nm³/kg kalziniertes Karbonatgestein, vorzugsweise weniger als 0,65 Nm³/kg kalziniertes Karbonatgestein. Üblicherweise war bisher insbesondere bei Kleinsteinöfen (Feinsteinöfen) eine Kühlluftmenge von mehr als 0,75 Nm³/kg kalziniertes Karbonatgestein erforderlich.

Weitere Ausgestaltungen der Erfindung sind Gegenstand der Unteransprüche.

Gemäß einer weiteren Ausgestaltung der Erfindung wird 20-50% der beiden Schächten zugeführten Kühlluft dem Brennschacht und die verbleibende Menge dem Regenerativschacht zugeführt. Vorzugsweise können 30% +/- 10% der beiden Schächten zugeführten Kühlluft dem Brennschacht und die verbleibenden Menge dem Regenerativschacht zugeführt werden. Bei den der Erfindung zugrundeliegenden Versuchen hat sich herauskristallisiert, dass die besten Ergebnisse dann erreicht werden, wenn dem Brennschacht etwa 1/3 und dem Regenerativschacht etwa 2/3 der gesamten Kühlluft zugeführt werden.

Die im Bereich der Austragseinrichtungen zugeführte Kühlluft wird zweckmäßigerweise über sich in diesem Bereich durch das kalzinierte und gekühlte Karbonatgestein ausgebildete Materialböschungen zugeführt. Gemäß einer weiteren Ausgestaltung der Erfindung soll die im Bereich der Austragseinrichtungen zugeführte Kühlluft im Wesentlichen nach oben und zur Mitte des Schachtes strömen. Die über die Verdrängungskörper zugeführte Kühlluft soll hingegen im Wesentlichen nach oben und zur Außenbegrenzung des Schachtes strömen.

Die gleichmäßige Kühlung des Karbonatgesteins wird auch durch die Arbeitsweise der Austragseinrichtung unterstützt, die vorzugsweise das kalzinierte und abgekühlte Karbonatgestein radial nach außen und radial nach innen austrägt, wobei 60-80% des kalzinierten und abgekühlten Karbonatgesteins außen und der Rest innen ausgetragen werden.

Die Kühlzone ist vorzugsweise zylindrisch oder leicht konisch ausgebildet und weist dabei einen Neigungswinkel von mehr als 82° auf. Um eine gute Kühlung zu gewährleisten sollte der Durchmesser am unteren Ende der Kühlzone außerdem 1.1-1.5 mal größer als der Durchmesser am unteren Ende der Vorwärm- und Brennzone sein.

Die Regelung der Kühlluftmenge über die erste bis vierte Kühlluftleitung erfolgt vorzugsweise über ein von der Steuereinrichtung ansteuerbares Klappensystem.

Weitere Vorteile und Ausgestaltungen der Erfindung werden anhand der nachfolgenden Beschreibung und der Zeichnung näher erläutert.

In der Zeichnung zeigen
- Fig. 1: eine schematische Darstellung eines erfindungsgemäß betreibbaren Gleichstrom-Regenerativ-Kalkschachtofen,
- Fig. 2: eine vergrößerte Darstellung des Details A der Fig. 1,
- Fig. 3: eine vergrößerte Darstellung des Details B der Fig. 1,
- Fig. 4: schematische Darstellung der Strömungsverhältnisse im Bereich der Kühlzone der beiden Schächte und
- Fig. 5: Darstellung der Temperaturverteilung in einer der Kühlzonen.

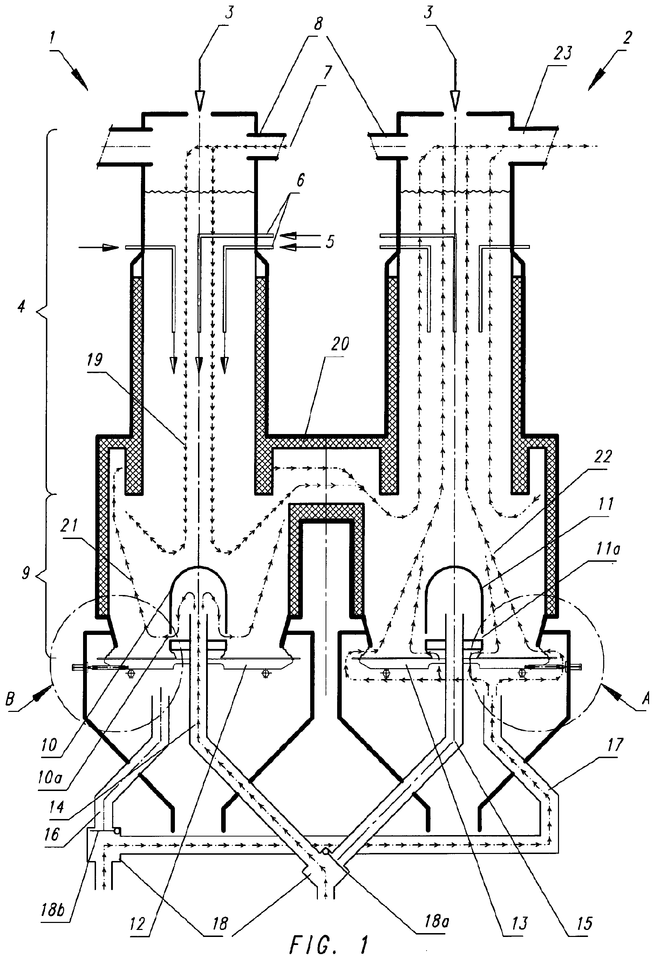

Der in Fig. 1 dargestellte Gleichstrom-Regenerativ-Kalkschachtofen zum Brennen und Kühlen von Karbonatgesteinen weist zwei Schächte 1, 2 auf, die in an sich bekannte Art und Weise abwechselnd als Brennschacht und als Regenerativschacht betrieben werden. Das Karbonatgestein 3 wird beispielsweise in einem Körnungsbereich von 10 mm bis 50 mm in einem oberen, als Vorwärm- und Brennzone 4 ausgebildeten Bereich jedes Schachtes zugegeben. Weiterhin wird Brennstoff 5 über eine Brennstoffzuleitung 6 und Verbrennungsluft 7 über wenigstens eine Verbrennungsluftzuleitung 8 zugeführt. Durch die Verbrennung des Brennstoffs 5 mit der Verbrennungsluft 7 wird das Karbonatgestein 3 im Bereich der Vorwärm- und Brennzone vorgewärmt und kalziniert. Das kalzinierte Karbonatgestein gelangt nachfolgend in einen unteren, als Kühlzone 9 ausgebildeten und einen zentralen Verdrängungskörper 10, 11 aufweisenden Bereich jedes Schachtes und wird dort abgekühlt. Das abgekühlte, kalzinierte Karbonatgestein wird anschließend über eine jedem Schacht zugeordnete Austragseinrichtung 12, 13 ausgetragen. Das Karbonatgestein 3 wandert somit der Schwerkraft folgend von oben nach unten. Die übliche Verweildauer beträgt beispielsweise 20 Stunden. Die Menge des unten ausgetragenen, abgekühlten Karbonatgesteins wird im oberen Bereich durch noch zu behandelndes Karbonatgestein 3 ergänzt.

Die Kühlung des kalzinierten Karbonatgesteins erfolgt durch Kühlluft, die der Kühlzone 9 an zwei Stellen zugeführt wird, nämlich über den Verdrängungskörper 10 bzw. 11 und im Bereich der Austragseinrichtungen 12 bzw. 13.

Die Verdrängungskörper sind jeweils mittig in der Kühlzone ausgebildet und können beispielsweise kegelförmig oder, wie dargestellt, eine oben abgerundet ausgebildet werden. Im unteren Bereich der Verdrängungskörper 10, 11 sind diese über ihren gesamten Umfang mit Gasaustrittsöffnungen 10a bzw. 11 a versehen.

Weiterhin steht eine erste Kühlluftleitung 14 mit den Gasöffnungen 10a des Verdrängungskörper 10 des Schachtes 1 und eine zweite Kühlluftleitung 15 mit den Gasaustrittsöffnungen 11a des Verbrennungskörper 11 des zweiten Schachtes 2 zur Zuführung von Kühlluft über die Verdrängungskörper in Verbindung. Weiterhin mündet eine dritte Kühlluftleitung 16 im Bereich der Austragseinrichtung 12 des ersten Schachtes 1 und eine vierte Kühlluftleitung 17 im Bereich der Austragseinrichtung 13 des zweiten Schachtes 2. Über ein geeignetes Klappensystem 18 das wenigstens eine erste Klappe 18a und eine zweite Klappe 18b umfasst, kann die Luftverteilung auf die Kühlluftmenge über die vier Kühlluftleitungen geregelt werden. Fig. 1 zeigt die Strömungsverhältnisse in einer Situation, bei der der Schacht 1 als Brennschacht und der Schacht 2 als Regenerierschacht betrieben wird. Das Klappensystem 18 wird über eine hier nicht näher dargestellte Steuerung so angesteuert, dass im Wesentlichen die gesamte, zumindest aber wenigstens 90% der dem Schacht 1 zuzuführenden Kühlluftmenge über die erste Kühlluftleitung 14 dem Verdrängungskörper 10 zugeführt wird, während die Kühlluftmenge im Schacht 2 im Wesentlichen ausschließlich über die zugehörige Austragseinrichtung 13 zugeführt wird. Über die Klappe 18a kann somit die Kühlluft wahlweise über den Verdrängungskörper 10 oder den Verdrängungskörper 11 zugeführt werden. Über geeignete Maßnahmen kann sichergestellt werden, dass über die abgesperrte Kühlluftleitung immer noch eine geringere Sperrluftmenge fließt, um ein Verstopfen der Gasaustrittsöffnungen der Verdrängungskörper zu vermeiden. In entsprechender Weise kann über die Klappe 18b die Kühlluft entweder über die dritte Kühlluftleitung 16 oder die vierte Kühlluftleitung 17 geführt werden, wobei auch hier die Einstellung einer geringen Menge an Sperrluft denkbar ist.

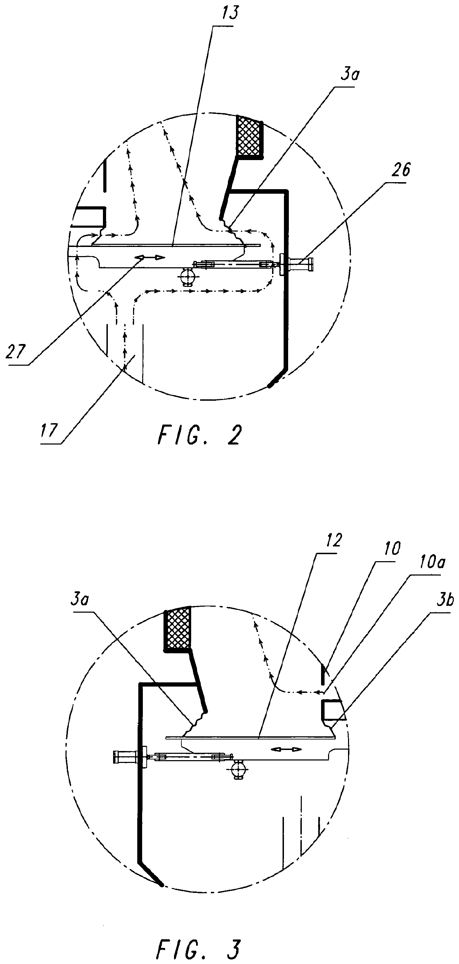

Die erste und zweite Kühlluftleitung 14, 15 die mit dem Verdrängungskörpern 10 und 11 in Verbindung stehen, münden zweckmäßigerweise im Inneren der hohl ausgebildeten Verdrängungskörper, sodass die Kühlluft dann über die Gasaustrittsöffnungen 10a bzw. 11a in die Kühlzone austritt. Die dritte und vierte Kühlluftleitung 16, 17 münden unterhalb der Austragseinrichtungen 12, 13, sodass die Kühlluft über sich durch das kalzinierte und gekühlte Karbonatgestein ausbildende Materialböschungen 3a, 3b auf den Austragseinrichtungen 12, 13 (siehe Fig. 2) zugeführt wird.

Im oberen Bereich des Schachtes 1 bilden sich durch die Verbrennung des Brennstoffs 5, mit der Verbrennungsluft 7 Rauchgase 19, die nach unten aus der Brennzone austreten und über den die beiden Schächte verbindenden Überströmkanal 20 in den Schacht 2 gelangen. Die über den Verdrängungskörper 10 zugeführte Kühlluft 21 wird von den aus der Brennzone von oben nach unten strömenden Rauchgasen verdrängt, sodass die Kühlluft 21 im Wesentlichen nach oben und zur Außenbegrenzung des Schachtes 1 strömt, um dort zusammen mit den Rauchgasen über den Überströmkanal 20 in den Schacht 2 zu gelangen.

Die Strömungsverhältnisse im Regenerierschacht 2 sind dagegen grundsätzlich anders. Zum einen erfolgt dort von oben keine Zuführung von Verbrennungsluft und es findet auch keine Verbrennung statt. Vielmehr strömen die Rauchgase 19 und die Kühlluft 21 aus dem Schacht 1 zusammen mit der Kühlluft 22 aus dem Schacht 2 nach oben und werden dort über eine Abgasleitung 23 ausgeschleust. Da die Kühlluft 22 im Schacht 2 im Wesentlichen ausschließlich über die Austragseinrichtung 13 zugeführt wird, ergibt sich eine Kühlluftströmung, die im Wesentlichen nach oben und zur Mitte des Schachtes ausgerichtet ist. Nach Ablauf eines vorgebenden Zyklus von beispielsweise 10-12 min. wechselt die Funktion der beiden Schächte, sodass dann der Schacht 1 zum Regenerierschacht wird und der Schacht 2 als Brennschacht fungiert. In entsprechender Weise wird dann auch die Zuführung der Kühlluft entsprechend geändert, sodass immer gewährleistet ist, dass die dem gerade als Brennschacht fungierenden Schacht zuzuführende Luftmenge zu 90-100% über den Verdrängungskörper und zur maximal 10% im Bereich der Austragseinrichtung zugeführt wird, während die dem Regenerierschacht zuzuführende Kühlluftmenge zur 90-100% im Bereich der Austragseinrichtung und nur zu maximal 10% über den Verdrängungskörper zugeführt wird.

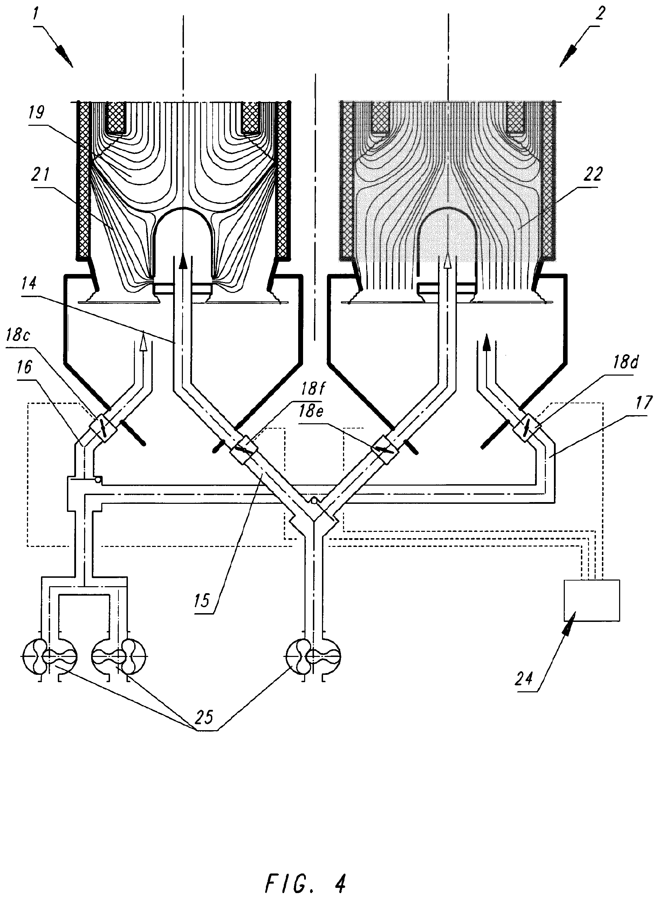

In Fig. 4 sind für die in Fig. 1 beschriebene Situation, bei der der Schacht 1 als Brennschacht und der Schacht 2 als Regenerierschacht betrieben wird, die Strömungslinien der Kühlluft 21 bzw. 22 und der Rauchgase 19 eingezeichnet. Man erkennt dabei eine sehr gleichmäßig Beaufschlagung der Kühlzonen mit Kühlluft.

Neben der Aufteilung der Zuführung der Kühlluft über den Verdrängungskörper des Brennschachtes und die Austragseinrichtung des Regenerierschachtes ist es ferner zweckmäßig, wenn die dem Brennschacht zuzuführende Kühlluftmenge geringer als die dem Regenerierschacht zuzuführende Kühlluftmenge gehalten wird. Als besonders effektiv hat sich dabei eine Aufteilung ergeben, bei der 30% bis 50% der Kühlluft über den Verdrängungskörper des Brennschachtes und der Rest der Kühlluft über die Austragseinrichtung des Regenerierschachtes zugeführt werden.

Im Ausführungsbeispiel gemäß Fig. 4 sind die Kühlluftleitungen 14 bis 17 jeweils mit einer über eine Steuereinrichtung 24 ansteuerbaren Klappe 18c, 18d, 18e und 18f versehen. Außerdem sind Kühlluftversorger 25 schematisch angedeutet.

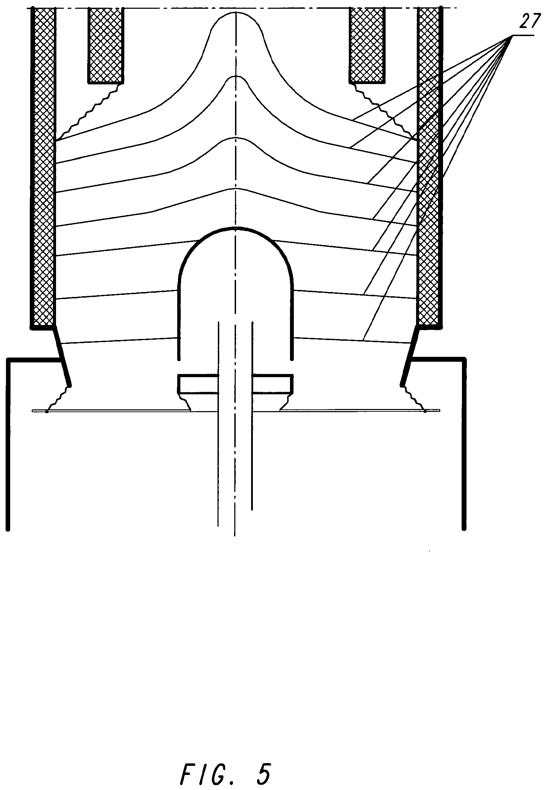

Aus Fig. 5 wird ersichtlich, dass sich im Bereich der Kühlzone Isothermenlinien 27 einstellen, die im Wesentlichen waagrecht verlaufen, sodass eine sehr gleichmäßige Kühlung des kalzinierten Karbonatgesteins über die Breite der Kühlzone gewährleistet ist. Es entstehen somit keine trogförmig durchhängenden Isothermenlinien, die zu einer Beschädigung der Austragseinrichtungen aufgrund von zu heißem Material führen könnten.

Die Austragseinrichtungen 12, 13 sind gemäß den Fig. 2 und 3 so ausgebildet, dass das kalzinierte und abgekühlte Karbonatgestein radial nach außen oder radial nach innen ausgetragen werden kann. Hierzu weisen die Austragseinrichtungen beispielsweise jeweils einen segmentartig ausgebildeten Austragstisch auf, der über eine Schiebemechanismus 26 in Richtung des Doppelpfeils 27 bewegt werden kann. Wird die Austragseinrichtung 13 in dem Fig. 2 dargestellten Ausführungsbeispiel nach links bewegt, wird sie unterhalb des Karbonatgesteins weggeschoben, bis das Gestein auf der Außenseite nach unten fällt. Bei einer Bewegung der Austragsrichtung in entgegengesetzter Richtung erfolgt der Austrag nach innen. Natürlich hat der Austrag des Materials auch einen entscheidenden Einfluss darauf, ob das Karbonatgestein möglichst gleichmäßig über die gesamte Breite nach unten rutscht. Bei dieser Art der Austragseinrichtung hat es sich als zweckmäßig erwiesen, wenn 60-80% des kalzinierten und abgekühlten Karbonatgesteins nach außen und der Rest nach innen ausgetragen werden.

Um eine effektive Kühlung zu gewährleisten, wird der Durchmesser am unteren Ende der Kühlzone so gewählt, dass er 1.1 bis 1.5 mal größer als der Durchmesser am unteren Ende der Vorwärm- und Brennzone ist, wobei als Durchmesser der Innendurchmesser der Kühlzone bzw. Vorwärm- und Brennzone zu verstehen ist. Die oben beschriebene Luftführung im Brennschacht bzw. Regenerierschacht ermöglicht eine äußerst effiziente Kühlung, sodass die gesamte Menge der zuzuführenden Kühlluft beim Kalzinieren von Karbonatgestein mit einen CaCO₃-Gehalt von mehr als 97% auf weniger als 0,7 Nm³/kg kalziniertes Karbonatgestein, vorzugsweise auf weniger als 0,65 Nm³/kg kalziniertes Karbonatgestein gesenkt werden kann. Dies hat den Vorteil, das auch die über die Abgasleitung 23 auszutragende Gasmenge entsprechend reduziert wird und der Wärmeverbrauch des Ofens sinkt.

Die erfindungsgemäße Luftführung führt außerdem zu einer starken Reduzierung der bisher festgestellten Randgängigkeit der Strömung. Außerdem wird die Gefahr von lokalen Bereichen, in welchen eine Rekarbonisierung auftreten kann reduziert.

## Patentansprüche

1. Verfahren zum Brennen und Kühlen von Karbonatgesteinen (3) in einem Gleichstrom-Regenerativ-Kalkschachtofen mit zwei Schächten (1, 2), die abwechselnd als Brennschacht und als Regenerativschacht betrieben werden, wobei
a. das Karbonatgestein (3) in einem oberen, als Vorwärm- und Brennzone (4) ausgebildeten Bereich jedes Schachtes zugegeben wird und dort vorgewärmt und kalziniert wird,
b. das kalzinierte Karbonatgestein (3) nachfolgend in einem unteren, als Kühlzone (9) ausgebildeten und einen zentralen Verdrängungskörper (10, 11) aufweisenden Bereich jedes Schachtes abgekühlt wird,
c. das abgekühlte, kalzinierte Karbonatgestein anschließend über eine jedem Schacht (1, 2) zugeordnete Austragseinrichtung (12, 13) ausgetragen wird, und wobei
d. der Kühlzone (9) zum Kühlen des kalzinierten Karbonatgesteins Kühlluft (21, 22) zugeführt wird, die zum Teil im Bereich der Austragseinrichtung (12, 13) und zum Teil über den Verdrängungskörper (10, 11) eingeführt wird,
**dadurch gekennzeichnet, dass** die dem Brennschacht zuzuführende Kühlluftmenge zu 90 bis 100% über den Verdrängungskörper und zu maximal 10% im Bereich der Austragseinrichtung zugeführt wird, während die dem Regenerierschacht zuzuführende Kühlluftmenge zu 90 bis 100% im Bereich der Austragseinrichtung und zu maximal 10% über den Verdrängungskörper zugeführt wird.

2. Verfahren nach Anspruch 1, **dadurch gekennzeichnet, dass** 20% bis 50% der beiden Schächten (1, 2) zugeführten Kühlluft dem Brennschacht und die verbleibende Menge dem Regenerativschacht zugeführt wird.

3. Verfahren nach Anspruch 2, **dadurch gekennzeichnet, dass** 30% +/- 10% der beiden Schächten (1, 2) zugeführten Kühlluft dem Brennschacht und die verbleibende Menge dem Regenerativschacht zugeführt wird.

4. Verfahren nach Anspruch 1, **dadurch gekennzeichnet, dass** die im Bereich der Austragseinrichtungen (12, 13) zugeführte Kühlluft über sich in diesem Bereich durch das kalzinierte und gekühlte Karbonatgestein ausbildende Materialböschungen (3a, 3b) zugeführt wird.

5. Verfahren nach Anspruch 1, **dadurch gekennzeichnet, dass** die im Bereich der Austragseinrichtungen (12, 13) zugeführte Kühlluft nach oben und zur Mitte des Schachtes strömt.

6. Verfahren nach Anspruch 1, **dadurch gekennzeichnet, dass** die über die Verdrängungskörper (10, 11) zugeführte Kühlluft nach oben und zur Außenbegrenzung des Schachtes strömt.

7. Verfahren nach Anspruch 1, **dadurch gekennzeichnet, dass** die Austragseinrichtung (12, 13) das kalzinierte und abgekühlte Karbonatgestein radial nach außen und radial nach innen austrägt, wobei 60 bis 80 % des kalzinierten und abgekühlten Karbonatgesteins außen und der Rest innen ausgetragen werden.

8. Verfahren nach Anspruch 1, **dadurch gekennzeichnet, dass** beim Kalzinieren von Karbonatgestein (3) mit einem CaCO₃ - Gehalt von mehr als 97% Kühlluft mit einer gesamten Menge von weniger als 0,70 Nm³/kg kalziniertes Karbonatgestein zugeführt wird.

## Claims

1. Process for burning and cooling carbonate rock (3) in a cocurrent regenerative lime kiln having two shafts (1, 2) which are operated alternately as burning shaft and as regenerative shaft, where
a. the carbonate rock (3) is introduced in an upper region configured as preheating and burning zone (4) of each shaft and is preheated and calcined there,
b. the calcined carbonate rock (3) is subsequently cooled in a lower region configured as cooling zone (9) and having a central displacement body (10, 11) of each shaft,
c. the cooled, calcined carbonate rock is subsequently discharged via a discharge device (12, 13) assigned to each shaft (1, 2), and where
d. cooling air (21, 22) is introduced into the cooling zone (9) to cool the calcined carbonate rock, part of which is introduced in the region of the discharge device (12, 13) and part of which is introduced via the displacement body (10, 11),
**characterized in that** the amount of cooling air to be fed into the burning shaft is fed in to an extent of from 90 to 100% via the displacement body and to an extent of not more than 10% in the region of the discharge device, while the amount of cooling air to be fed into the regeneration shaft is fed to an extent of from 90 to 100% in the region of the discharge device and to an extent of not more than 10% via the displacement body.

2. Process according to Claim 1, **characterized in that** from 20% to 50% of the cooling air fed into the two shafts (1, 2) is fed to the burning shaft and the remaining amount is fed to the regenerative shaft.

3. Process according to Claim 2, **characterized in that** 30% +/- 10% of the cooling air fed into the two shafts (1, 2) is fed to the burning shaft and the remaining amount is fed to the regenerative shaft.

4. Process according to Claim 1, **characterized in that** the cooling air fed into the region of the discharge devices (12, 13) is fed in via dams of material (3a, 3b) formed in this region by the calcined and cooled carbonate rock.

5. Process according to Claim 1, **characterized in that** the cooling air fed into the region of the discharge devices (12, 13) flows upward and to the middle of the shaft.

6. Process according to Claim 1, **characterized in that** the cooling air fed in via the displacement bodies (10, 11) flows upward and to the outer boundary of the shaft.

7. Process according to Claim 1, **characterized in that** the discharge device (12, 13) discharges the calcined and cooled carbonate rock radially outward and radially inward, with from 60 to 80% of the calcined and cooled carbonate rock being discharged outward and the remainder being discharged inward.

8. Process according to Claim 1, **characterized in that** in the case of calcination of carbonate rock (3) having a CaCO₃ content of more than 97%, cooling air is fed in in a total amount of less than 0.70 standard m³/kg of calcined carbonate rock.

## Revendications

1. Procédé de combustion et de refroidissement de roches carbonatées (3) dans un chaufour à régénération par courant continu avec deux cuves (1, 2), qui fonctionnent en alternance comme cuve de combustion et comme cuve de régénération, dans lequel
a. on charge la roche carbonatée (3) dans une région supérieure de chaque cuve, formant une zone de préchauffage et de combustion (4), et elle y est préchauffée et calcinée,
b. on refroidit ensuite la roche carbonatée calcinée (3) dans une région inférieure de chaque cuve, formant une zone de refroidissement (9) et présentant un corps de déplacement central (10, 11),
c. on extrait ensuite la roche carbonatée calcinée refroidie au moyen d'un dispositif d'extraction (12, 13) associé à chaque cuve (1, 2), et dans lequel
d. on envoie dans la zone de refroidissement (9) pour le refroidissement de la roche carbonatée calcinée, de l'air de refroidissement (21, 22) que l'on introduit en partie dans la région du dispositif d'extraction (12, 13) et en partie via le corps de déplacement (10, 11),
**caractérisé en ce que** la quantité d'air de refroidissement à fournir à la cuve de combustion est envoyée à raison de 90 à 100 % via le corps de déplacement et d'au maximum 10 % dans la région du dispositif d'extraction, tandis que la quantité d'air de refroidissement à fournir à la cuve de régénération est envoyée à raison de 90 à 100 % dans la région du dispositif d'extraction et d'au maximum 10 % via le corps de déplacement.

2. Procédé selon la revendication 1, **caractérisé en ce que** l'on envoie de 20 % à 50 % de l'air de refroidissement fourni aux deux cuves (1, 2) à la cuve de combustion et la quantité restante à la cuve de régénération.

3. Procédé selon la revendication 2, **caractérisé en ce que** l'on envoie 30 % ± 10 % de l'air de refroidissement fourni aux deux cuves (1, 2) à la cuve de combustion et la quantité restante à la cuve de régénération.

4. Procédé selon la revendication 1, **caractérisé en ce que** l'on envoie l'air de refroidissement fourni dans la région des dispositifs d'extraction (12, 13) via des talus de matière (3a, 3b) se formant dans cette région par la roche carbonatée calcinée et refroidie.

5. Procédé selon la revendication 1, **caractérisé en ce que** l'air de refroidissement fourni dans la région des dispositifs d'extraction (12, 13) s'écoule vers le haut et vers le milieu de la cuve.

6. Procédé selon la revendication 1, **caractérisé en ce que** l'air de refroidissement fourni via les corps de déplacement (10, 11) s'écoule vers le haut et vers la paroi extérieure de la cuve.

7. Procédé selon la revendication 1, **caractérisé en ce que** le dispositif d'extraction (12, 13) extrait radialement vers l'extérieur et radialement vers l'intérieur la roche carbonatée calcinée et refroidie, dans lequel 60 à 80 % de la roche carbonatée calcinée et refroidie sont extraits extérieurement et le reste intérieurement.

8. Procédé selon la revendication 1, **caractérisé en ce que** lors de la calcination de roche carbonatée (3) présentant une teneur en CaCO₃ de plus de 97 %, on envoie de l'air de refroidissement avec une quantité totale de moins de 0,70 Nm³/kg de roche carbonatée calcinée.
